Europäisches Patentamt

European Patent Office

Office européen des brevets

(11) Publication number: **0 070 268**
**A2**

# (12) EUROPEAN PATENT APPLICATION

(21) Application number: **82850154.4**

(22) Date of filing: **06.07.82**

(51) Int. Cl.³: **B 62 K 21/26**
**B 05 D 5/00, B 25 G 1/00**

(30) Priority: **10.07.81 SE 8104303**
**23.03.82 SE 8201978**

(43) Date of publication of application:
**19.01.83 Bulletin 83/3**

(84) Designated Contracting States:
**AT BE CH DE FR GB IT LI NL**

(71) Applicant: **Renatus AB**
**Wollins trappor 1**
**S-414 63 Göteborg(SE)**

(72) Inventor: **Alm, Kjell Krister**
**Hällristningsvägen 3**
**S-430 80 Hovas(SE)**

(72) Inventor: **Aronsson, Lars Ingvar**
**Norra Traneredsvägen 30B**
**S-421 77 Västra Frölunda(SE)**

(74) Representative: **Ryrlén, Evert et al,**
**ALFONS HEDBERGS PATENTBYRÅ AB**
**Aschebergsgatan 35**
**S-411 33 Göteborg(SE)**

(54) **An arrangement in surfaces intended for contact with the human skin.**

(57) Handle the surface of which has been made skin compatible by application thereon of an adhesive layer in which are anchored synthetic fibres (3) having a length of 0.5 mm, said fibres projecting from the layer at right angles thereto.

Fig 1

EP 0 070 268 A2

An Arrangement in Surfaces Intended for Contact
with the Human Skin

There are many problems connected with surfaces intended to be in contact with the human skin. For instance, as a result of contact over longer periods between the palm of the hand and the handle of e.g. a tool, ski poles, bicycle handle bars and implements of various kinds moisture forms in the hand. Particularly in the case of non-callous palm surfaces such long--lasting contacts cause blisters to form in the areas of contact, which may be painful and lead to infections of the exposed areas. When tools and implements which have metal handles are used out-of-doors there is a risk that the skin of the hand may freeze fast to the handle at very low temperatures. The use of vibrating tools may give the operator "dead fingers", which is a form of circulatory disturbance to which are exposed for instance forest workers, mechanics, building workers, painters and dentists. The cause probably is a disturbance in the blood circulatory system, which manifests itself in the fingers turning pale and lipid and the hands cold and numb.

Tools are made from a great variety of different materials having different properties. In addition, tools are used in a variety of different environments. Tool shafts may be made of e.g. metal which is a good heat conductor. As a result, the temperature of the tool handle may change rapidly and consequently good heat insulation of the tool shaft and handle is a desirable feature. But also when the tool shaft and handle are made from other materials than metal some kind of insulation might be desirable. For instance, wooden handles, when having been in use for a long time, become dry and therefore unpleasant to the touch. Another reason to insulate shafts and handles is for protection against e.g. electric currents. In addition, insulation of shafts and handles may be required out of consideration for allergic individuals or as a precaution against direct contact with allergenic materials. A further reason to provide handle insulation is to prevent splinters from the handle from penetrating into the hand of the user.

According to prior-art techniques protective sleeves of rubber or plastics are used as insulators. These sleeves are mounted over the shafts or handles. Sleeves of this kind are, however, inadequate since their outer surfaces intended for contact with the palm of the hand are slippery and even. As a result, no ventilation is possible between the hand and the tool handle, which may cause blisters and other skin irritations to form in the hand.

The purpose of the subject invention is to treat surfaces intended for direct contact with the human skin in such a manner that all problems outlined above are completely eliminated. This is achieved in accordance with the invention by ventilating the surface through application thereon of a layer of an adhesive onto which is applied, in an electrostatic process, a surface layer consisting of short synthetic-material fibres, these fibres anchored in the adhesive layer so as to project essentially at right angles therefrom.

An additional purpose of the subject invention is to provide a sleeve or handle to be used on shafts of various kinds, such as the shafts of tools and implements of various kinds, and which sleeve or handle obviates the disadvantages inherent in prior-art handles and in addition thereto offers the user a firm grip. This is achieved in accordance with the invention in that the handle consists of a tube of a cheap material, on the outer surface of which are applied flocking fibres in a manner known per se.

Further characteristics and advantages of the invention will appear from the appended claims.

The invention will be described in closer detail in the following with reference to the accompanying drawings, wherein

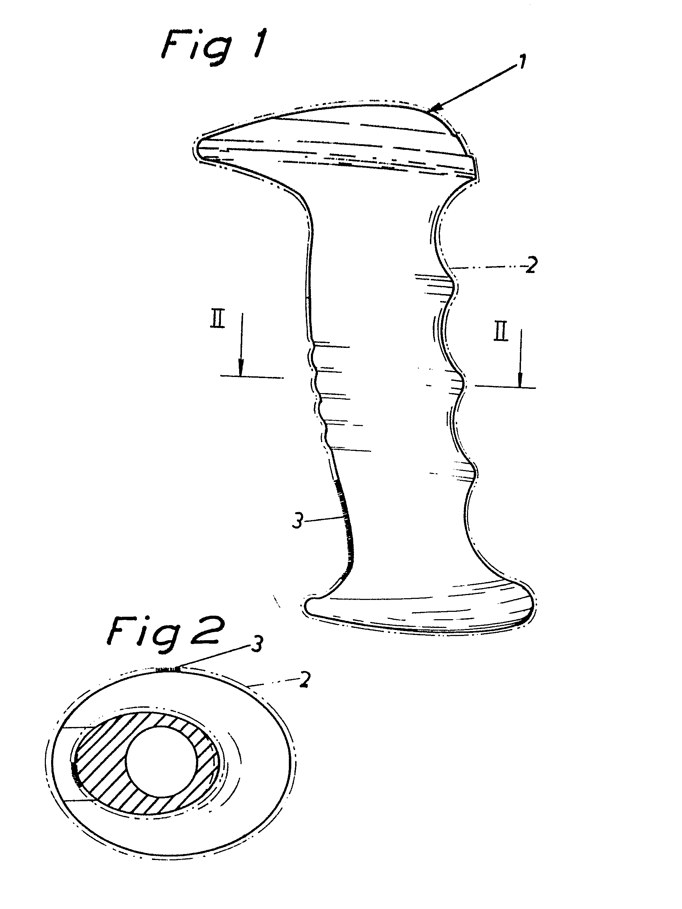

Fig. 1 is a lateral view of a handle in accordance with the invention,

Fig. 2 shows a section along line II-II of Fig. 1,

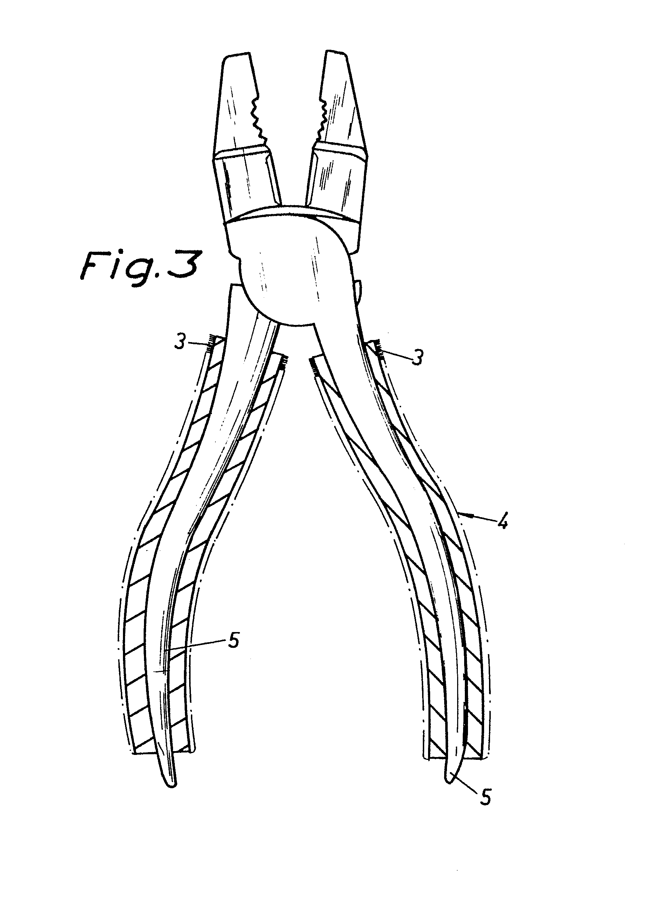

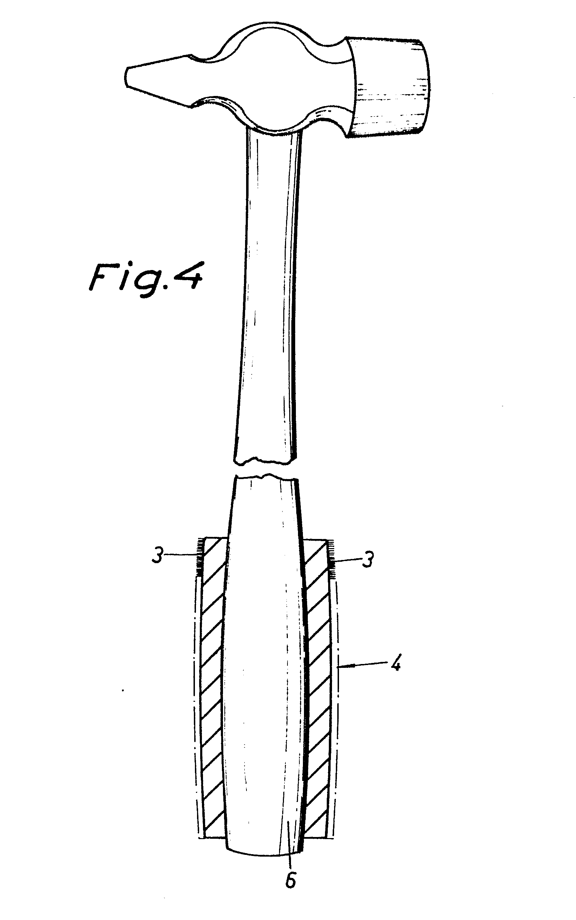

Figs. 3 and 4 are longitudinal sections through sleeves in accordance with the invention, mounted on tool shafts, viz. a pair of pliers and a hammer. The sleeve in accordance with the invention may have thinner walls than what is shown in the drawings.

The handle 1 illustrated in the drawings may be used for e.g. ski poles and as far as its shape is concerned the handle does not display any particular and novel characteristics. However, in accordance with the teachings of the subject invention, there is applied on the entire handle 1 a covering layer 2 of fibres 3. The application of the layer is effected by initially covering the handle with an adhesive, which may be an alkyd-resin based adhesive, onto which is then applied short fibres 3 in an electrostatic process. Owing to the electrostatic process the applied fibres will assume a

4

position in which they project from the surface essentially at right angles thereto. The fibres preferably are nylon fibres having a length of 0.5 mm and they are securely anchored in the adhesive layer since in the electrostatic process they will be so to speak shot into the adhesive.

A handle prepared in this manner may be regarded as ventilated and as a consequence thereof the generation of hand perspiration is considerably reduced. The skin therefore is not softened by moisture and as a result there is no risk that blisters will form. When the handle is used in severe cold there is not either any risk that the skin will stick to the handle. In addition, tests show that circulatory disturbances of the hands caused by the use of vibrating tools are also prevented, for which reason there is no risk that the user will be afflicted by "dead fingers".

Although it is prior knowledge to pre-treat handles such pre-treatments have hitherto consisted in winding straps helically about the handles. This method does not, however, provide the same kind of surface layer as according to the teachings of the subject invention, which includes perpendicularly projecting fibres. Consequently, the improved and particularly advantageous effects demonstrated in practical tests in handles prepared in accordance with the subject invention are not either found in handles prepared according to prior-art knowledge.

The sleeve 4 may, as illustrated in the drawings, consist of a cut-off piece of a tube of foamed plastics. On the tube is applied in a manner known per se a layer of flocking fibres 3. These may be applied in an electrostatic process. The cut-off piece of plastic tube is applied over the shaft or handle 6 to be protected and the tool is then ready to be used.

ɔ

Owing to the provision of the flocking fibres the hand is ventilated when the tool is in use and consequently the risk that blisters form in the hand is greatly reduced. In addition, the foamed plastics provide good insulation against heat, electric currents, etc.

The sleeve in accordance with the invention is cheap to produce and therefore may be manufactured in large quantities. When a sleeve in accordance with the invention is worn out, it is cut open and removed and a fresh sleeve is applied. In this manner the serviceable life of the tool itself may be increased as a consequence of the reduced wear on its shaft or handle.

The flocking fibres and the sleeve also provide an improved grip, which reduces the risk that the tool, on account of the handle being wet and slippery, will slip away from the hand when in use.

To facilitate mounting of the sleeve in accordance with the invention it may be provided with internal grooves at one end.

In some cases it may be advantageous to produce the sleeve from a heat-contractible hose onto which flocking fibres are applied. This contractible hose is thereafter applied over the shaft or handle onto which it is to be mounted and is secured thereto through application of heat, which makes the hose contract. The contraction is preferably effected with the aid of an ordinary hair dryer (125°C).

The invention is not limited to the embodiment as shown and described herein but several modifications thereof are possible within the scope of the appended claims. Such modifications may include for instance

6

variety of the kind and nature of the adhesive used as also of the synthetic material fibres. Within certain limits it is also possible to modify the length of the fibres. Sleeves in accordance with the invention may be used e.g. for golf clubs, hockey and bandy clubs, bicycle handle bars, rackets for various sports such as tennis, badminton, squash etc. Another application for the sleeve is on door handles. The sleeve may be a rubber tube instead of the foamed plastics tube as described.

1

Claims

1. An arrangement in surfaces intended for contact with the human skin, c h a r a c t e r i s e d i n t h a t the surface is ventilated through the application thereon of a layer of an adhesive onto which is applied, in an electrostatic process, a layer (2) consisting of short fibres (3) of a synthetic material, said fibres projecting from the surface essentially at right angles thereto.

2. An arrangement in surfaces as claimed in claim 1, c h a r a c t e r i s e d i n t h a t the surface is the external face of a sleeve (4) which is intended to be applied over the shaft or handle of a tool, handle bar, club etc., that the sleeve (1) is a tube of a flexible material, and that flocking fibres (3) are applied in a manner known per se on the external face of said tube.

3. An arrangement in surfaces as claimed in claim 2, c h a r a c t e r i s e d i n t h a t the sleeve is provided with internal radial grooves along at least part of its extension.

4. An arrangement in surfaces as claimed in claim 2 or 3, c h a r a c t e r i s e d i n t h a t the sleeve is a piece of a heat-contractible hose arranged to be shrunk onto a handle or shaft.

5. An arrangement in surfaces as claimed in any one of the preceding claims, c h a r a c t e r i s e d i n t h a t the fibres have a length of 0.5 mm.

2

6. An arrangement in surfaces as claimed in any one
of the preceding claims, c h a r a c t e r i s e d
i n   t h a t   the adhesive is an alkyd-resin based
adhesive and in that the fibres are nylon fibres.

1/3

Fig 1

Fig 2

*Fig.3*

3

3

4

5

5

Fig.4

3

3

4

6